Europäisches Patentamt

European Patent Office

Office européen des brevets

(11) Veröffentlichungsnummer: **0 352 419**
**A2**

(12) **EUROPÄISCHE PATENTANMELDUNG**

(21) Anmeldenummer: **89108579.7**

(22) Anmeldetag: **12.05.89**

(51) Int. Cl.4: **H02P 3/12 , B04B 9/10**

(30) Priorität: **29.07.88 DE 3825835**

(43) Veröffentlichungstag der Anmeldung:
**31.01.90 Patentblatt 90/05**

(84) Benannte Vertragsstaaten:
**AT BE CH DE ES FR GB GR IT LI LU NL SE**

(71) Anmelder: **BERTHOLD HERMLE GMBH & CO.**
**Industriestrasse 8-12**
**D-7209 Gosheim(DE)**

(72) Erfinder: **Hermle, Harald**
**Griesweg 12**
**D-7201 Mahlstetten(DE)**
Erfinder: **Ulber, Hans Christoph**
**Sommerrainstrasse 54**
**D-7209 Wehingen(DE)**

(74) Vertreter: **Vetter, Hans, Dipl.-Phys. Dr. et al**
**Patentanwalte Dipl.-Ing. Rudolf Magenbauer**
**Dipl.-Phys. Dr. Otto Reimold Dipl.-Phys. Dr.**
**Hans Vetter Hölderlinweg 58**
**D-7300 Esslingen(DE)**

(54) **Elektrische Bremsvorrichtung für eine Zentrifuge.**

(57) Es wird eine elektrische Bremsvorrichtung für eine durch einen Elektromotor (10) angetriebenen Zentrifuge vorgeschlagen, wobei der Elektromotor (10) im Bremsbetrieb über eine Schalteinrichtung (22) kurzschließbar ist. Dabei ist die Erregerwicklung (20) des Elektromotors (10) mit einer elektrischen Versorgungseinrichtung (17) verbunden, die in der Erregerwicklung (20) einen Strom erzeugt, der eine umgekehrte Proportionalität zur Drehzahl des Elektromotors (10) aufweist. Hierdurch steigt bei absinkender Drehzahl der Feldstrom des Elektromotors (10) an, so daß trotz der geringer werdenden induzierten Spannung im Anker (23) ein hohes Bremsdrehmoment praktisch bis zum Stillstand des Elektromotors erhalten bleibt, wodurch eine gleichmäßige und schnelle Abbremsung möglich ist.

## Elektrische Bremsvorrichtung für eine Zentrifuge

Die Erfindung betrifft eine elektrische Bremsvorrichtung für eine durch einen Elektromotor mit einer Erregerwicklung angetriebenen Zentrifuge, wobei der Elektromotor über eine Schalteinrichtung kurzschließbar ist.

Zum Abbremsen von elektromotorisch angetriebenen Zentrifugen wird vielfach die elektrische Bremsung angewandt, die auch als sogenannte "Gegenstrombremsung" bekannt ist. Hierbei wird der Anker des Elektromotors kurzgeschlossen, während die Feldwicklung über einen Strom oder Stromimpulse erregt wird. Im Anker fließt dabei beim Bremsen ein Kurzschlußstrom, der am inneren Widerstand des Ankers einen Verlust verursacht und dabei ein Bremsdrehmoment aufbaut. Eine derartige elektrische Bremsung ist beispielsweise im KRAFTFAHRTECHNISCHEN TASCHENBUCH, Robert Bosch GmbH, 1984, S. 344, näher beschrieben.

Zentrifugen werden oft in einem großen Drehzahlbereich betrieben, der beispielsweise von ca. 500 U/min bis über 10000 U/min reicht. Beim Bremsen aus hohen Drehzahlen entsteht auf Grund der hohen im Anker induzierten Spannung ein sehr hohes Bremsdrehmoment, während bei niedrigen Drehzahlen die induzierte Spannung sehr stark abfällt, so daß das Bremsdrehmoment beinahe gegen Null geht. Nun werden bei hohen Drehzahlen vorwiegend Rotoren mit geringerer Masse eingesetzt, bei denen das benötigte Bremsmoment entsprechend klein ist, während bei schweren Rotoren, die vorwiegend in niedrigen Drehzahlbereichen eingesetzt werden, ein höheres Bremsmoment wünschenswert ist, um ein schnelles Abbremsen des Rotors zu ermöglichen. Das bei der bekannten elektrischen Bremsung anfallende Bremsdrehmoment entspricht daher in keiner Weise den Erfordernissen.

Eine Aufgabe der Erfindung besteht daher darin, eine elektrische Bremse für Zentrifugen zu schaffen, deren Bremsdrehmoment über den gesamten Drehzahlbereich annähernd konstant gehalten werden kann.

Diese Aufgabe wird erfindungsgemäß dadurch gelöst, daß die Erregerwicklung im Bremsbetrieb bei kurzgeschlossenem Elektromotor mit einer elektrischen Versorgungseinrichtung verbunden ist, die in der Erregerwicklung einen Strom erzeugt, der eine umgekehrte Proportionalität zur Drehzahl des Elektromotors aufweist.

Mit einer derartigen Bremsvorrichtung kann nicht nur das Bremsdrehmoment über den gesamten, vorkommenden Drehzahlbereich annähernd konstant gehalten werden, sondern es können auch umgekehrt proportionale Verhältnisse geschaffen werden, bei denen das Bremsdrehmoment bei niedrigeren Drehzahlen sogar noch ansteigt, sofern dies im Einzelfalle wünschenswert ist. Die Abbremsung der Zentrifuge erfolgt gleichmäßig praktisch bis zum Stillstand des Rotors. Die Vorgabe verschiedener Bremskennlinien ist auf einfache Weise möglich. Beim Austausch von Rotoren untereinander, die bei unterschiedlichen Drehzahlen betrieben werden, braucht keine gesonderte Anpassung des Bremsverhaltens erfolgen.

Durch die in den Unteransprüchen aufgeführten Maßnahmen sind vorteilhafte Weiterbildungen und Verbesserungen der im Anspruch 1 angegebenen Bremsvorrichtung möglich.

Eine besonders einfache schaltungsmäßige Ausgestaltung wird dadurch erreicht, daß im Bremsbetrieb wenigstens eine drehzahlabhängige Spannung über ein invertierendes Glied der Erregerwicklung zuführbar ist, wobei insbesondere als drehzahlabhängige Spannung die Tachospannung des Elektromotors verwendet werden kann und wobei das invertierende Glied zweckmäßigerweise als invertierender Verstärker ausgebildet ist.

Zur Beeinflussung des Stroms durch die Erregerwicklung im Bremsbetrieb kann entweder die Ausgangsspannung des invertierenden Glieds einstellbar ausgebildet sein und/oder es ist ein Funktionsgenerator zur Erzeugung wenigstens einer funktional von der Drehzahl abhängigen Spannung vorgesehen.

Mit einer einzigen Schalteinrichtung, die in der Bremsstellung die elektrische Versorgungseinrichtung mit der Erregerwicklung verbindet und einen Anker des Elektromotors über einen Kurzschlußzweig kurzschließt und in der Antriebsstellung den Kurzschlußzweig sowie eine Verbindung zwischen der elektrischen Versorgungseinrichtung und der Erregerwicklung unterbricht, kann auf einfache Weise die Umschaltung zwischen Bremsbetrieb und Antriebsbetrieb durchgeführt werden.

Die elektrische Versorgungseinrichtung kann zweckmäßigerweise sowohl den Bremsstrom für die Erregerwicklung als auch den Antriebsstrom für den Elektromotor erzeugen. Hierzu ist vorzugsweise diese elektrische Versorgungseinrichtung eingangsseitig über eine Umschalteinrichtung mit einer Steuerspannung beaufschlagt, die im Bremsbetrieb die Ausgangsspannung des invertierenden Glieds und im Antriebsbetrieb die Ausgangsspannung einer Steuer- oder Regelvorrichtung für die Drehzahl ist. Die Umschalteinrichtung und die Schalteinrichtung können dabei zweckmäßigerweise synchron betätigbar sein.

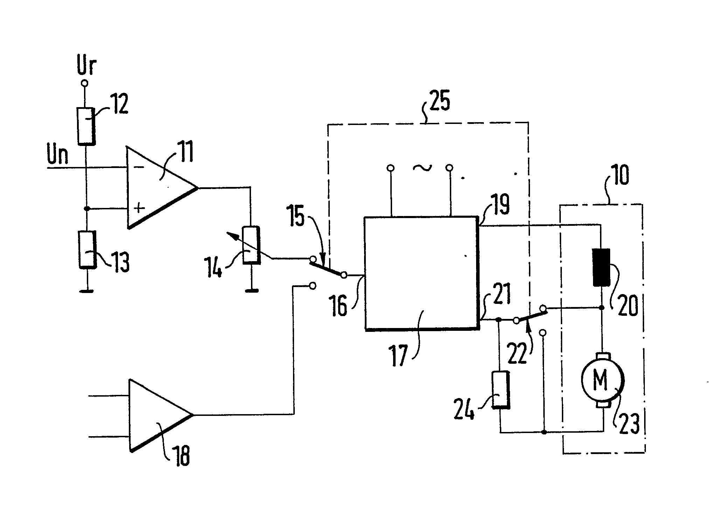

Ein Ausführungsbeispiel der Erfindung ist in der Zeichnung dargestellt und in der nachfolgenden Beschreibung näher erläutert. Die einzige Figur zeigt ein Schaltbild eines Ausführungsbeispiels der elektrischen Bremsvorrichtung.

Eine drehzahlabhängige Spannung Un, die die Tachospannung eines Elektromotors 10 zum Antrieb einer nicht dargestellten Zentrifuge oder die Spannung eines separaten Drehzahlgebers sein kann, ist dem invertierenden Eingang eines invertierenden Verstärkers 11 zugeführt. Der nicht invertierende Eingang dieses Verstärkers 11 ist durch einen aus zwei Widerständen 12, 13 bestehenden Spannungsteiler, an dem eine Festspannung Ur angelegt ist, mit einer Referenzspannung beaufschlagt. Der Ausgang des invertierenden Verstärkers 11 liegt über ein Potentiometer 14 an Masse.

Ein Abgriff des Potentiometers 14 ist über einen Umschalter 15 mit einem Steuereingang 16 einer Phasenanschnittschaltung 17 verbunden, die an sich zur Motorsteuerung bekannt ist und über eine Netzspannung versorgt wird. Durch den Umschalter 15 ist alternativ auch der Ausgang einer Steuer- oder Regelvorrichtung 18 für die Drehzahl des Elektromotors 10 mit dem Steuereingang 16 verbindbar. Diese Steuer- oder Regelvorrichtung ist nur schematisch dargestellt und kann beispielsweise als Mikrorechner ausgebildet sein, der die Drehzahl des Elektromotors 10 anhand vorgegebener Kennlinie oder Kennlinienverläufe regelt.

Ein erster ausgangsseitiger Anschluß 19 der Phasenanschnittschaltung 17 ist mit einem Anschluß einer Erregerwicklung 20 oder Feldwicklung des als Reihenschlußmotor ausgebildeten Elektromotors 10 verbunden, während ein zweiter ausgangsseitiger Anschluß 21 der Phasenanschnittschaltung 17 über einen zweiten Umschalter 22 mit dem Verknüpfungspunkt zwischen der Erregerwicklung 20 und einem Anker 23 des Elektromotors 10 verbunden ist. In der zweiten Schaltstellung des Umschalters 22 wird die Verbindung zur Erregerwicklung 20 unterbrochen und dafür eine Verbindung zum zweiten Anschluß des Ankers 23 hergestellt. Ein Bremswiderstand 24 ist parallel zum Umschalter 22 in seiner zweiten Schaltstellung geschaltet.

Durch eine gestrichelte, die beiden Umschalter 15, 22 verbindende Linie 25 ist angedeutet, daß diese beiden Umschalter 15, 22 miteinander gekoppelt sind, das heißt, daß nur ein einziger Schaltvorgang erforderlich ist, um die beiden Umschalter in die jeweils andere Schaltstellung zu bringen.

Die in der Figur dargestellte Schaltstellung der beiden Umschalter 15, 22 ist die Schaltstellung im Bremsbetrieb des Elektromotors 10, also die Schaltstellung zum Abbremsen des Rotors der nicht dargestellten und vom Elektromotor 10 angetriebenen Zentrifuge. Die Ausgangsspannung der Phasenanschnittschaltung 17 liegt an der Erregerwicklung 20, und der Anker 23 ist über den Bremswiderstand 24 kurzgeschlossen. Bei infolge des Bremsbetriebs ab nehmender Drehzahl sinkt auch die drehzahlabhängige Spannung Un. Infolge des invertierenden Verstärkers 11 steigt jedoch dabei dessen Ausgangsspannung und damit die Steuerspannung am Steuereingang 16 der Phasenanschnittschaltung 17 an. Dies wiederum führt zu einem sich erhöhenden Feldstrom in der Erregerwicklung 20, der sich damit umgekehrt proportional zur Drehzahl verhält. Obwohl die im Anker induzierte Spannung bei sinkender Drehzahl abfällt, bleibt daher das Bremsdrehmoment infolge des sich erhöhenden Feldstroms in der Erregerwicklung 20 erhalten, so daß dieses Bremsdrehmoment während des Abbremsvorgangs annähernd konstant gehalten werden kann. Die Größe des Bremsdrehmoments kann dabei durch das Potentiometer 14 eingestellt werden.

Um den Rotor zu beschleunigen oder wieder zu beschleunigen, werden die beiden Umschalter 15, 22 in ihre zweite Schaltstellung gelegt. Nunmehr wirkt die Ausgangsspannung der Steuer- oder Regelvorrichtung 18 als Steuerspannung auf die Phasenanschnittschaltung 17 ein, und die Ausgangsspannung derselben liegt an der Reihenschaltung der Erregerwicklung 20 mit dem Anker 23 an.

Alternativ zur dargestellten Schaltungsanordnung können auch anstelle des invertierenden Verstärkers 11 andere invertierende Schaltungen oder elektronische Einrichtungen treten, die bei absinkender, drehzahlabhängiger Spannung eine ansteigende Steuerspannung für die Phasenanschnitt schaltung 17 erzeugen. Hierbei kann es sich um invertierende Funktionsgeneratoren handeln oder um Funktionsgeneratoren, die invertierenden Gliedern zugeordnet sind, wobei selbstverständlich auch Mikrorechner diese Funktionen übernehmen können. Dabei ist es auch möglich, mehrere verschiedene Kennlinien von umgekehrter Proportionalität zur Drehzahl zu erzeugen, die alternativ auswählbar und als entsprechende Ströme der Erregerwicklung 20 zugeführt werden können. Hierdurch können verschiedene Bremscharakteristiken vorgegeben werden.

Anstelle einer Phasenanschnittschaltung kann prinzipiell auch eine andere elektrische Versorgungseinrichtung treten, die auch einen nicht taktenden Betrieb aufweisen kann und einen entsprechenden Feldstrom erzeugt. Im einfachsten Fall kann die Phasenanschnittschaltung auch entfallen, wobei dann die Ausgangsspannung des invertierenden Verstärkers 11 direkt zur Erzeugung des Feldstroms dient.

Das durch die beschriebene Anordnung erreichte, nicht nur gleichmäßige, sondern auch schnelle Abbremsen des Rotors einer Zentrifuge wird praktisch verschleißfrei erreicht, so daß auch eine lange Lebensdauer dieser Bremsvorrichtung gewährleistet ist. Die Bremsvorrichtung ist auch nicht auf Reihenschlußmotoren beschränkt, sondern für alle Motoren anwendbar, die eine Erregerwicklung aufweisen, also auch z. B. von Nebenschlußmotoren.

## Ansprüche

1. Elektrische Bremsvorrichtung für eine durch einen Elektromotor mit einer Erregerwicklung angetriebene Zentrifuge, wobei der Elektromotor über eine Schalteinrichtung kurzschließbar ist, dadurch gekennzeichnet, daß die Erregerwicklung (20) im Bremsbetrieb bei kurzgeschlossenem Elektromotor (10) mit einer elektrischen Versorgungseinrichtung (17) verbunden ist, die in der Erregerwicklung (20) einen Strom erzeugt, der eine umgekehrte Proportionalität zur Drehzahl des Elektromotors (10) aufweist.

2. Bremsvorrichtung nach Anspruch 1, dadurch gekennzeichnet, daß im Bremsbetrieb wenigstens eine drehzahlabhängige Spannung (Un) über ein invertierendes Glied (11) der Erregerwicklung (20) zuführbar ist.

3. Bremsvorrichtung nach Anspruch 2, dadurch gekennzeichnet, daß der Erregerwicklung (20) verschiedene Spannungen, die verschiedene funktionale Abhängigkeiten zur Drehzahl aufweisen, alternativ zuführbar sind.

4. Bremsvorrichtung nach Anspruch 3, dadurch gekennzeichnet, daß ein Funktionsgenerator zur Erzeugung wenigstens einer funktional von der Drehzahl abhängigen Spannung vorgesehen ist.

5. Bremsvorrichtung nach einem der Ansprüche 2 bis 4, dadurch gekennzeichnet, daß die drehzahlabhängige Spannung die Tachospannung des Elektromotors (10) ist.

6. Bremsvorrichtung nach einem der Ansprüche 2 bis 5, dadurch gekennzeichnet, daß das invertierende Glied (11) als invertierender Verstärker ausgebildet ist.

7. Bremsvorrichtung nach einem der Ansprüche 2 bis 6, dadurch gekennzeichnet, daß die Ausgangsspannung des invertierenden Glieds (11) einstellbar ist.

8. Bremsvorrichtung nach einem der vorhergehenden Ansprüche, dadurch gekennzeichnet, daß die Schalteinrichtung (22) in der Bremsstellung die elektrische Versorgungseinrichtung (17) mit der Erregerwicklung (20) verbindet und einen Anker (23) des Elektromotors (10) über einen Kurzschlußzweig kurzschließt und in der Antriebsstellung den Kurzschlußzweig sowie eine Verbindung zwischen der elektrischen Versorgungseinrichtung (17) und der Erregerwicklung (20) unterbricht.

9. Bremsvorrichtung nach Anspruch 8, dadurch gekennzeichnet, daß die Verbindung zwischen der elektrischen Versorgungseinrichtung (17) und der Erregerwicklung (20) einen Teil des Kurzschlußzweigs darstellt.

10. Bremsvorrichtung nach einem der vorhergehenden Ansprüche, dadurch gekennzeichnet, daß die elektrische Versorgungseinrichtung (17) sowohl den Bremsstrom für die Erregerwicklung (20) als auch den Antriebsstrom für den Elektromotor (10) erzeugt.

11. Bremsvorrichtung nach Anspruch 10, dadurch gekennzeichnet, daß die elektrische Versorgungseinrichtung (17) eingangsseitig über eine Umschalteinrichtung mit einer Steuerspannung beaufschlagt ist, die im Bremsbetrieb die Ausgangsspannung des invertierenden Glieds (11) und im Antriebsbetrieb die Ausgangsspannung einer Steuer- oder Regelvorrichtung (18) für die Drehzahl ist.

12. Bremsvorrichtung nach Anspruch 11, dadurch gekennzeichnet, daß die Umschalteinrichtung (15) und die Schalteinrichtung (22) synchron betätigbar sind.

13. Bremsvorrichtung nach einem der vorhergehenden Ansprüche, dadurch gekennzeichnet, daß die elektrische Versorgungseinrichtung (17) als Phasenanschnittschaltung ausgebildet ist.